# EUROPÄISCHE PATENTSCHRIFT

(11) **EP 1 329 399 B1**
(45) Veröffentlichungstag und Bekanntmachung des Hinweises auf die Patenterteilung: **04.03.2009**
(21) Anmeldenummer: 02024367.1
(22) Anmeldetag: 02.11.2002
(51) Int. Cl.: B65G 21/06, B65G 21/10

(54) **Kopfstück sowie Anordnung zum Einstellen des Gurtlaufes eines Förderers**
Head piece and device for adjusting the run of the belt of a conveyor
Pièce de tête et dispositif pour le réglage de la course de la courroie d'un convoyeur

(30) Priorität: 22.01.2002 DE 10202420
(43) Veröffentlichungstag der Anmeldung: 23.07.2003
(73) Patentinhaber: Blesinger, Ludwig Stephan, 42389 Wuppertal (DE); Blesinger, Thomas, 52428 Jülich (DE)
(72) Erfinder: Blesinger, Thomas, 52428 Jülich (DE); Blesinger, Ludwig Stephan, Dr., 42389 Wuppertal (DE); Hoeps, Carsten, Dipl.-Ing., 52428 Jülich (DE)
(74) Vertreter: Castell, Klaus

(56) Entgegenhaltungen:
- FR-A- 895 738
- US-A- 3 699 820
- US-A- 5 054 608
- US-A- 5 609 238

## Beschreibung

Die Erfindung betrifft ein Kopfstück sowie eine Anordnung zum Einstellen eines Gurtlaufes an einem Fördersystem aus einem Kopfstück, einem Stellklotz und einer Druckplatte.

Um eine Walze bzw. eine Umkehrwalze eines Förderbandes an einer Fördermaschine zu fixieren, sind aus dem Stand der Technik sogenannte Kopfstücke bekannt, die eine derartige Walze in sich lagern und an dem Rahmen eines Fördersystems angebracht sind.

Es sind beispielsweise Kopfstücke bekannt, die einige Durchgangslöcher aufweisen, in denen jeweils eine Schraube angeordnet ist, die zusammen das Kopfstück mittels eines Nutsteins gegenüber dem Rahmen der Fördermaschine verklemmen.

Um einen Gurtlauf einer Fördermaschine einzustellen, wird das Kopfstück ein wenig von dem Rahmen gelöst, gerade so, dass es gegenüber diesem beweglich ist und anschließend mittels einer Gewindestange derart verschoben werden kann, dass sich hierbei der Gurt allmählich spannt. Hierzu ist die Gewindestange in einem Stellklotz gelagert, der in unmittelbarer Nähe, außerhalb des Kopfstückes fest an dem Rahmen des Fördersystems angeordnet ist. Ist das Kopfstück dann schließlich derart positioniert, dass der Gurt ausreichend gespannt ist, wird das Kopfstück mittels der vorstehend beschriebenen Schrauben und des jeweiligen Nutsteins wieder mit dem Rahmen verklemmt.

Eine derart beschriebene Anordnung von Kopfstück und Stellklotz ist baulich jedoch relativ aufwendig gestaltet.

Aus der US PS 3,699,820 ist ein Kopfstück gemäß dem Oberbegriff des Anspruchs 1 bekannt, bei dem innerhalb einer Ausnehmung eine Kolbenzylindereinheit angeordnet ist, um das Kopfstück relativ zum Rahmen zu bewegen. Auch diese Ausgestaltung ist für viele praktische Einsatzzwecke zu aufwendig.

Der Erfindung liegt die Aufgabe zugrunde, ein Kopfstück derart weiter zu entwickeln, dass insbesondere die gesamte Anordnung zum Einstellen eines Gurtlaufes baulich wesentlich einfacher wird.

Die Aufgabe der Erfindung wird zum einen gelöst von einem Kopfstück zum Einstellen eines Gurtlaufes an einem Förderbandsystem, welches Fördersystem eine Walze und einen an dem Rahmen des Fördersystems angeordneten Stellklotz aufweist, mit einer ersten Materialausnehmung zum Aufnehmen eines Lagers der Walze und wenigstens eine weitere Materialausnehmung, in welcher der Stellklotz anordenbar ist, wobei diese weitere Materialausnehmung eine Längserstreckung in Richtung der Längsachse des Kopfstückes aufweist, wobei an wenigstens einer die weitere Materialausnehmung umgrenzenden Seite des Kopfstückes eine durchgehende Gewindebohrung angeordnet ist, in welcher eine Gewindestange anordenbar ist, wobei das Kopfstück mittels der Gewindestange gegenüber dem Stellklotz verstellt werden kann.

Das Kopfstück ist derart ausgebildet, dass es in der wenigstens einen weiteren Materialausnehmung einen Stellklotz in sich aufnehmen kann und hierdurch eine wesentliche Platzersparnis bedingt. So steht der gewonnene Raum ggf. für andere Anwendungen zur Verfügung. Außerdem ergibt sich durch die Anwendung des Kopfstückes eine vereinfachte Gurtlaufeinstellung, so dass diesbezügliche Arbeiten wesentlich schneller und effektiver durchführbar sind.

Die wenigstens eine weitere Materialausnehmung liegt hierbei in einer Ebene des Kopfstückes, in welcher auch die erste Materialausnehmung des Lagers angeordnet ist. Hierbei liegt die Materialausnehmung zum Aufnehmen eines Lagers hinsichtlich der Längsachse des Kopfstückes an einem ersten Ende des Kopfstückes in einem Bereich einer vorderen Stirnseite, wohingegen die wenigstens eine weitere Materialausnehmung in einem Bereich angeordnet ist, welcher sich an einem dem ersten Ende entgegengesetzten Ende des Kopfstückes befindet. Um dem Kopfstück ein Gleiten in Richtung seiner Länge zu ermöglichen, ist eine Längserstreckung der Materialausnehmung in Richtung der Länge des Kopfstückes vorgesehen.

Unter dem Begriff "Materialausnehmung" versteht man im Sinne der Erfindung einen Bereich des Kopfstückes, an bzw. in welchem weitere Bauteile anordenbar sind. Darunter sind jedoch Schrauben oder vergleichbare Befestigungsmittel nicht zu verstehen.

Es versteht sich, dass eine derartige Materialausnehmung nicht vollständig geschlossen umrandet sein muss. Beispielsweise ist sie von einem U-Profil bzw. von einem C-Profil teilweise umfasst, wobei sich hierbei trotzdem eine sichere Aufnahme des Stellklotzes innerhalb des Kopfstückes realisieren lässt. Das U-Profil bzw. C-Profil ist hierbei mittels des Kopfstückes gebildet.

Eine bevorzugte Ausführungsvariante sieht jedoch vor, dass die weitere Materialausnehmung als Nut verläuft. Hierbei ist die Materialausnehmung durch vier Seiten des Kopfstückes umgrenzt, so dass das Kopfstück an allen seinen dem Stellklotz zugewandten Seiten geführt werden kann. Im Gegensatz zu einer nicht vollständig umschlossenen Materialausnehmung hat das Kopfstück eine wesentlich höhere Festigkeit und kann dadurch eingeleitete Kräfte wesentlich besser aufnehmen.

Um einen Gurt eines Fördersystems besonders günstig spannen zu können, ist vorgesehen, dass die Materialausnehmung oder die Nut in Längsrichtung des Kopfstückes ausgerichtet ist.

Um die durch den Gurt auf das Kopfstück eingeleiteten Kräfte besonders günstig in den Stellklotz einzuleiten, ist es vorteilhaft, wenn die in Längsrichtung verlaufende Mittelachse der weiteren Materialausnehmung beabstandet von einer durch das Lageraugenzentrum des Walzenlagers verlaufenden Mittelachse des Kopfstückes angeordnet ist. Hierdurch lässt sich das Kopfstück auch unter großer Last besonders leicht relativ zum Stellklotz bewegen.

Um eine Gewindestange zum Verstellen des Kopfstückes gegenüber dem Stellklotz an einer besonders günstigen Stelle des Kopfstückes anzuordnen, ist an wenigstens einer die weitere Materialausnehmung umgrenzenden Seite des Kopfstückes eine durchgehende Gewindebohrung angeordnet. Vorzugsweise fällt die Mittelachse der Bohrung mit derjenigen Längsachse des Kopfstückes zusammen, die durch das Zentrum der Walzenlageraufnahme verläuft.

Die Gewindestange kann somit in der durchgehenden Gewindebohrung von einem äußeren Bereich des Kopfstückes zu einem inneren Bereich des Kopfstückes (Materialausnehmung) angeordnet werden.

Es versteht sich, dass hierbei das Kopfstück gegenüber dem Stellklotz ein gegenläufiges Gewinde aufweist.

Besonders vorteilhaft ist es, wenn das Kopfstück ein Widerlager aufweist. Hierdurch ist es nicht mehr notwendig, dass je nach Ausführungsform des Kopfstückes ein Widerlager außerhalb des Kopfstückbereiches angeordnet werden muss. Vielmehr ist das Widerlager in dem Kopfstück integriert, wodurch sich eine erhebliche Platzeinsparung realisieren lässt. An einem Widerlager stützt sich wie bei herkömmlichen Anordnungen eine Einstellschraube eines Kopfstückes ab, so dass mittels der Einstellschraube das Kopfstück relativ zu einem Förderbandrahmen bewegt werden kann.

Vorteilhaft ist es, wenn im Bereich des Widerlagers die Gewindebohrung angeordnet ist.

Damit das Kopfstück auch hohe Kräfte aus dem Bereich des Walzenlagers aufnehmen kann, gewichtsmäßig sich jedoch in einem vertretbaren Bereich befindet, ist es vorteilhaft, wenn das Kopfstück eine Materialdicke von weniger als 30 mm, vorzugsweise von weniger als 20 mm, aufweist.

Die "Dicke" des Materials verläuft hierbei in Richtung der Materialausnehmung, orthogonal zu der Längsausrichtung des Kopfstückes. Die Dicke des Kopfstückes entspricht hierbei dem Begriff "Tiefe" des Kopfstückes.

Vorteilhaft ist es auch, wenn das Kopfstück wenigstens eine weitere Bohrung aufweist, in welcher ein Befestigungsmittel eines Spaltschutzes angeordnet ist. Ein derartiger Spaltschutz kann dazu genutzt werden, ein im Kopfstück gelagertes Walzenlager beziehungsweise einen Bereich um das Walzenlager herum vor Einwirkungen aus der Umgebung zu schützen. Hierdurch lässt sich beispielsweise ein hervorragender Schutz bzw. Staubschutz realisieren.

Vorzugsweise ist der Spaltschutz aus einem Kunststoff hergestellt. Es versteht sich aber, dass der Spaltschutz je nach Kundenwunsch oder Anwendungsfall aus einem beliebigen Material, insbesondere aus einem Metall, hergestellt sein kann.

Ist an dem Kopfstück eine Antriebswalze gelagert, ist es vorteilhaft, wenn das Kopfstück einen Motorhalter aufweist. Dieser Motorhalter ist vorzugsweise an das Kopfstück angeschraubt und beabstandet einen Antriebsmotor gegenüber dem gesamten Fördersystem.

Um baulich den Gegebenheiten eines bekannten Fördersystems besonders gut zu entsprechen, ist es vorteilhaft, wenn das Kopfstück entlang seiner Längsachse verschiedene Werte hinsichtlich einer Kopfstücktiefe aufweist.

Unter dem Begriff "Kopfstücktiefe" versteht man im Sinne der Erfindung denjenigen Verlauf des Kopfstückes, welcher der Materialdicke des Kopfstückes entspricht. Hierbei beginnt der Verlauf orthogonal zu einer Längsachse an der dem Förderbandrahmen zugewandten Seite des Kopfstückes und endet an der dem Förderbandrahmen abgewandten Seite des Kopfstückes oder umgekehrt.

Damit das Kopfstück zum einen hinsichtlich seiner Höhe ausreichend schmal baut und zum anderen trotzdem in der Lage ist, auch größere Walzenlager aufzunehmen zu können, ist es ganz besonders vorteilhaft, wenn das Kopfstück entlang seiner Längsachse und orthogonal zu einer Öffnung der Materialausnehmung verschiedene Werte hinsichtlich einer Höhe aufweist.

Im vorliegenden Zusammenhang bezeichnet der Begriff "Höhe" die räumliche Ausdehnung des Kopfstückes, welche sich orthogonal zu der Kopfstücktiefe erstreckt.

Es versteht sich, dass das Kopfstück aus einer Vielzahl von Materialien hergestellt werden kann. Vorteilhaft ist es, wenn das Kopfstück aus einer Stahllegierung oder aus einer Aluminiumlegierung hergestellt ist. Insbesondere eine Aluminiumlegierung eignet sich dazu, dem Kopfstück ein besonders gutes Verhältnis zwischen Materialfestigkeit und Materialgewicht zu verleihen.

Die Aufgabe der Erfindung wird zum anderen gelöst von einer Anordnung zum Einstellen eines Gurtlaufes an einem Fördersystem nach Anspruch 12.

Eine derartige Anordnung ist zum einen baulich besonders einfach und zum anderen besonders platzsparend konstruiert, da der Stellklotz erfindungsgemäß innerhalb des Kopfstückes angeordnet ist.

Da die Anordnung eine Einstellmechanik für einen Gurtlauf darstellt, vereinfacht sich die Handhabung dieser Einstellmechanik, so dass beispielsweise ein Spannen des Gurtes wesentlich schneller vorgenommen werden kann.

Ein weiterer wesentlicher Vorteil ist darin zu sehen, dass insbesondere die Einstellmechanik weniger anfällig gegenüber Verschmutzungen ist. Beispielsweise wirkt sich dies positiv auf Reinigungsintervalle aus.

Besonders vorteilhaft ist es, wenn das Kopfstück in der weiteren Materialausnehmung an dem Stellklotz gelagert ist. Hierdurch lassen sich beispielsweise Kräfte von dem Kopfstück in den Stellklotz oder umgekehrt besonders gut einleiten.

Der Stellklotz ist hierbei gleichzeitig auch ein Nutstein, der das Kopfstück insbesondere während eines Einstellvorganges eines Gurtlaufes führt.

Besonders vorteilhaft ist es, wenn das Kopfstück um den Stellklotz herum angeordnet ist. Hierdurch ist es möglich, dass das Kopfstück an jeder Stelle mittels des Stellklotzes geführt ist.

Vorteilhafterweise ergibt sich daraus, dass das Kopfstück ein Schlitten ist, der bei Bedarf relativ zum Stellklotz bewegbar ist. Durch die Schlittenfunktion ist ein Einstellvorgang hinsichtlich eines Gurtlaufes besonders einfach und exakt durchzuführen.

Um das Kopfstück auch bei hohen Kräften relativ einfach gegenüber dem Stellklotz bzw. gegenüber dem Rahmen des Fördersystems zu bewegen, ist vorgesehen, dass die Anordnung eine Gewindestange aufweist, mit welcher das Kopfstück relativ zu dem Stellklotz bzw. relativ zu dem Rahmen des Fördersystems bewegbar ist. Es versteht sich, dass neben der Gewindestange auch weitere Einstelleinrichtungen zum Bewegen des Kopfstückes relativ zum Stellklotz verwendet werden können.

Besonders effektiv kann das Kopfstück gegenüber dem Stellklotz bewegt werden, wenn der Stellklotz eine Längsbohrung aufweist, in welcher die Gewindestange anordenbar ist.

Damit die Gewindestange genügend Bewegungsfreiheit innerhalb der Längsbohrung hat, ist es vorteilhaft, wenn die Längsbohrung eine Durchgangsbohrung ist. Hierdurch wird die Bewegungsfreiheit der Gewindestange im Gegensatz zu einer Sacklochbohrung nicht beeinträchtigt.

Um mittels der Gewindestange auf einfache Art und Weise Kräfte auf den Stellklotz übertragen zu können, ist es vorteilhaft, wenn die Längsbohrung ein Gewinde aufweist.

Um mittels der Druckplatte das Kopfstück im Bereich des Stellklotzes gegen einen Rahmen des Fördersystems verklemmen zu können, ist es vorteilhaft, wenn der Stellklotz eine geringere Tiefe aufweist als die Tiefe der Materialausnehmung beziehungsweise als die Tiefe des Kopfstückes.

Der Stellklotz kann beispielsweise an die Druckplatte geschweißt, geklebt oder hartgelötet sein.

Um die Anordnung baulich besonders einfach zu gestalten, ist es vorteilhaft, wenn der Stellklotz und die Druckplatte einteilig sind. Vorzugsweise sind der Stellklotz und die Druckplatte einteilig aus einem Werkstück hergestellt. Insbesondere die Einteiligkeit begünstigt die Einstellungsarbeiten hinsichtlich des Kopfstückes, da die Druckplatte und der Stellklotz mit den selben Schrauben am Rahmen des Fördersystems befestigt werden können.

Damit die den Stellklotz aufweisende Druckplatte das Kopfstück gegen den Rahmen des Fördersystems verklemmen kann, ist es vorteilhaft, wenn die Druckplatte den Stellklotz überdeckt.

Um insbesondere die Gewindeverstellung des Stellklotzes sowie die Mechanik zwischen dem Stellklotz und dem Kopfstück besonders gut vor Verunreinigungen zu schützen, ist vorgesehen, dass die Druckplatte die Materialausnehmung überdeckt. Gerade bei Fördersystemen, welche ein stark schmutzendes Medium fördern, verschmutzt die Einstelleinrichtung herkömmlicher Förderbänder sehr stark, sodass teilweise die Funktionstüchtigkeit zum Einstellen des Gurtlaufes negativ beeinträchtig ist. Ein derartiges Abdecken vermindert zudem eine Verletzungsgefahr, da beispielsweise ein Einklemmen von Fingern, insbesondere während des Einstellvorganges gegenüber einer weitestgehend offenliegenden Mechanik herkömmlicher Förderbänder, stark verringert ist.

Der Vollständigkeit halber ist zu erwähnen, dass die Merkmale hinsichtlich des Stellklotzes und der Druckplatte bzw. eine Kombination der Merkmale von Stellklotz und Druckplatte und den daraus resultierenden Vorteilen auch unabhängig von den übrigen Merkmalen der Erfindung vorteilhaft sind. Dies betrifft insbesondere den hohen Schutz der Mechanik gegenüber Verunreinigungen. Hierdurch profitiert besonders ein Nutzer eines Fördersystems, welches mit dem erfindungsgemäßen Kopfstück ausgerüstet ist, da der Nutzer zum einen die Mechanik weniger oft reinigen muss und zum anderen geförderte Lebensmittel wesentlich besser gegenüber einer ggf. mit Schmierstoffen geschmierten Einstellmechanik geschützt sind.

Herkömmliche Stellklötze hatten nur die Aufgabe die Einstelleinrichtung wie beispielsweise eine Gewindestange aufzunehmen und hierdurch Kräfte zu übertragen.

Wird der Stellklotz nun zusätzlich als Nutstein verwendet, ergeben sich weitere wichtige und vorteilhafte Funktionen. Dies sind zum einen eine Führung des Kopfstückes entlang des Stellklotzes und zum anderen die Aufnahme einer Druckplatte, sodass auf einfache Art und Weise das Kopfstück gegen den Rahmen eines Fördersystems verklemmt werden kann.

Weitere Vorteile, Ziele und Eigenschaften vorliegender Erfindung werden anhand nachfolgender Erläuterungen anliegender Zeichnung beschrieben, in welcher beispielhaft Bauteile einer Anordnung zum Einstellen eines Gurtlaufes dargestellt sind.

Es zeigt
- Figur 1: eine schematische Seitenansicht eines Kopfstückes,
- Figur 2: eine schematische Vorderansicht des Kopfstückes aus Figur 1,
- Figur 3: eine schematische Draufsicht des Kopfstückes aus Figur 1 und Figur 2,
- Figur 4: eine perspektivische Ansicht des Kopfstückes aus den Figuren 1 bis 3,
- Figur 5: eine schematische Seitenansicht eines Kopfstückes mit einem vergrößerten Lagerbereich zur Aufnahme eines Motors,
- Figur 6: eine schematische Vorderansicht des Kopfstückes aus Figur 5,
- Figur 7: eine schematische Draufsicht des Kopfstückes aus den Figuren 5 und 6,
- Figur 8: eine perspektivische Ansicht des Kopfstückes aus den Figuren 5 bis 7,
- Figur 9: eine schematische Seitenansicht eines Stellklotzes,
- Figur 10: eine schematische Vorderansicht des Stellklotzes aus Figur 9,
- Figur 11: eine schematische Draufsicht des Stellklotzes aus den Figuren 9 und 10,
- Figur 12: eine perspektivische Ansicht des Stellklotzes aus den Figuren 9 bis 11,
- Figur 13: eine schematische Seitenansicht eines Kopfstückes mit einem Stellklotz und einem Motorflansch,
- Figur 14: eine schematische Draufsicht des Kopfstückes aus Figur 13,
- Figur 15: eine schematische Vorderansicht des Kopfstückes aus den Figuren 13 und 14,
- Figur 16: eine perspektivische Ansicht des Kopfstückes aus den Figuren 13 bis 15,
- Figur 17: eine schematische Seitenansicht eines Kopfstückes mit einem Stellklotz und einem Spaltschutz,
- Figur 18: eine schematische Draufsicht des Kopfstückes aus Figur 17,
- Figur 19: eine schematische Vorderansicht des Kopfstückes aus den Figuren 17 und 18,
- Figur 20: eine perspektivische Ansicht des Kopfstückes aus den Figuren 17 bis 19,
- Figur 21: eine schematische Seitenansicht eines Fördersystems und
- Figur 22: eine schematische Draufsicht des Fördersystems aus Figur 21.

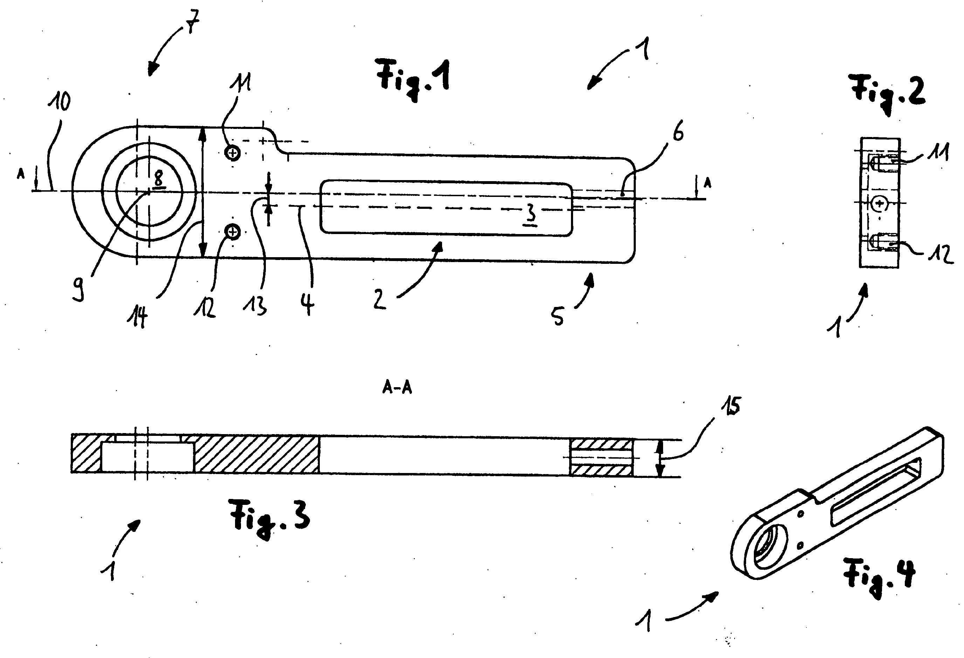

Das in den Figuren 1 bis 4 gezeigte Kopfstück 1 umfasst eine Materialausnehmung 2, die als Nut 3 entlang einer Längsachse 4 des Kopfstückes 1 verläuft. Die Längsachse 4 ist die mittlere Längsachse der Nut 3.

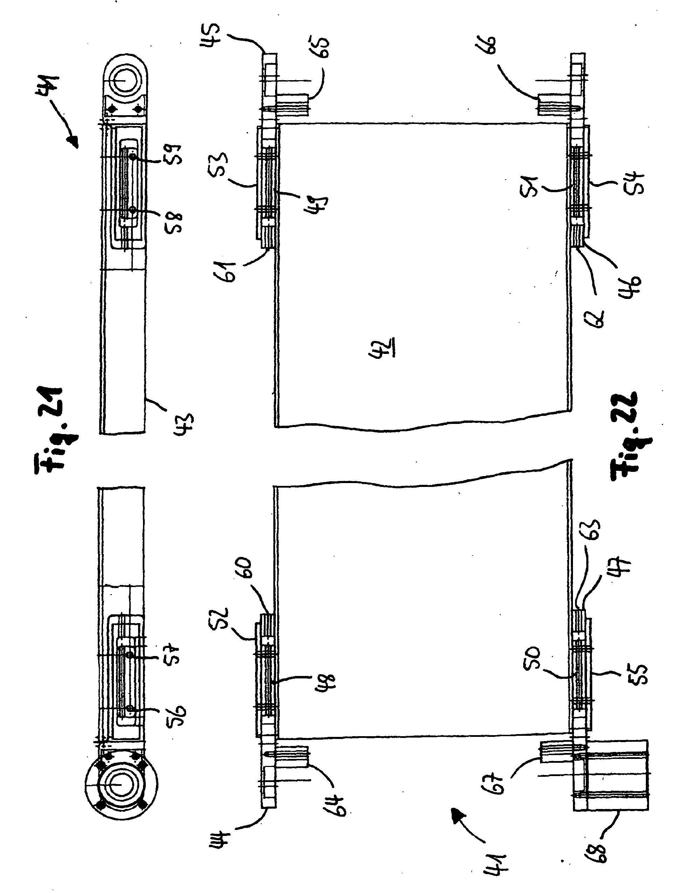

Im rechten Bereich 5 des Kopfstückes 1 ist eine Gewindebohrung 6 angeordnet, in welcher eine Gewindestange 60, 61, 62 und 63 (Fig. 22) angeordnet werden kann.

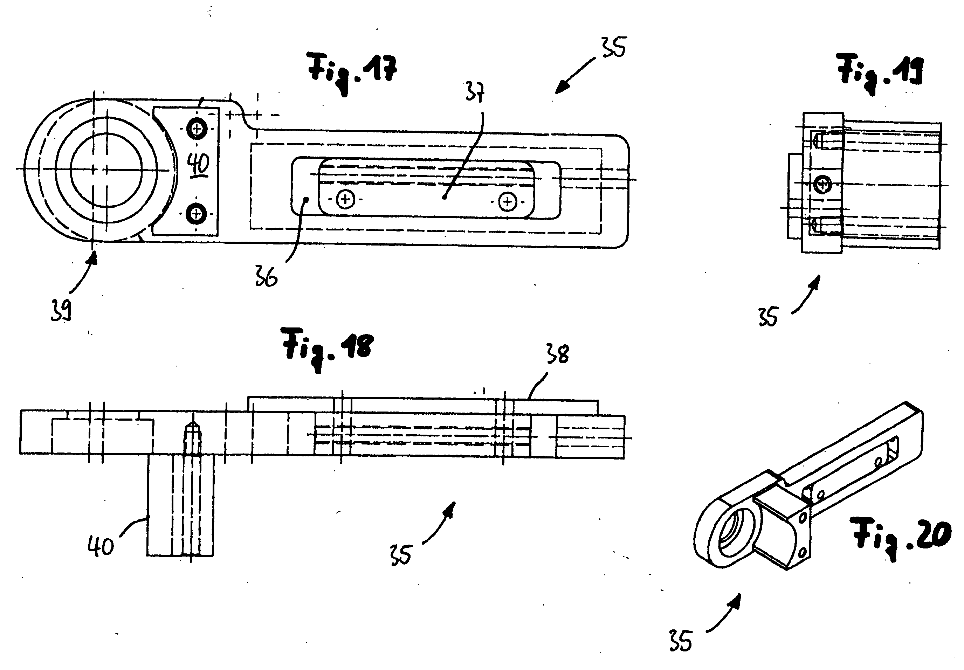

Die linke Seite 7 des Kopfstückes 1 umfasst einen Lagerbereich 8, in welchem ein Walzenlager (hier nicht dargestellt) angeordnet werden kann. Der Lagerbereich 8 umfasst ein Lageraugenzentrum 9, welches mit der Mittelachse 10 des Kopfstückes 1 zusammenfällt. Zwischen dem Lagerbereich 8 und der Materialausnehmung 2 sind zwei weitere Gewindebohrungen 11 und 12 angeordnet. Die Gewindebohrungen 11 und 12 dienen dazu, einen Spaltschutz 40 (siehe Figuren 17 bis 20) an dem Kopfstück 1 anzuordnen. Die Gewindebohrungen 11 und 12 sind Gewindesacklochbohrungen (siehe Figur 2). Die Mittellinie 4 und die Mittellinie 10 weisen einen Abstand 13 zueinander auf.

Das Kopfstück 1 hat eine Höhe 14, wobei die Höhe 14 in Richtung der Längsachse 10 verschiedene Werte annimmt. Das Kopfstück 1 hat in diesem Ausführungsbeispiel eine Dicke 15 von 15 mm.

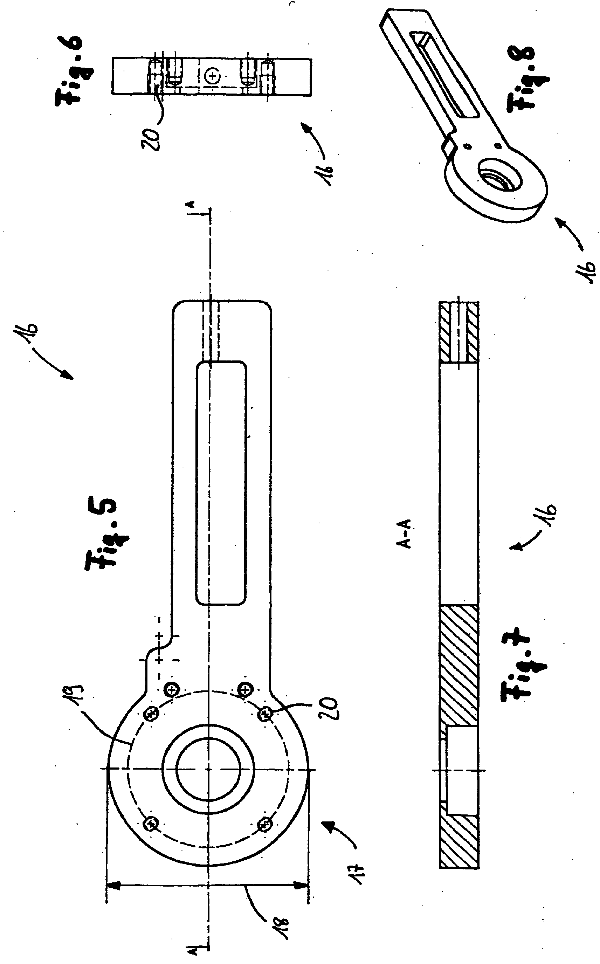

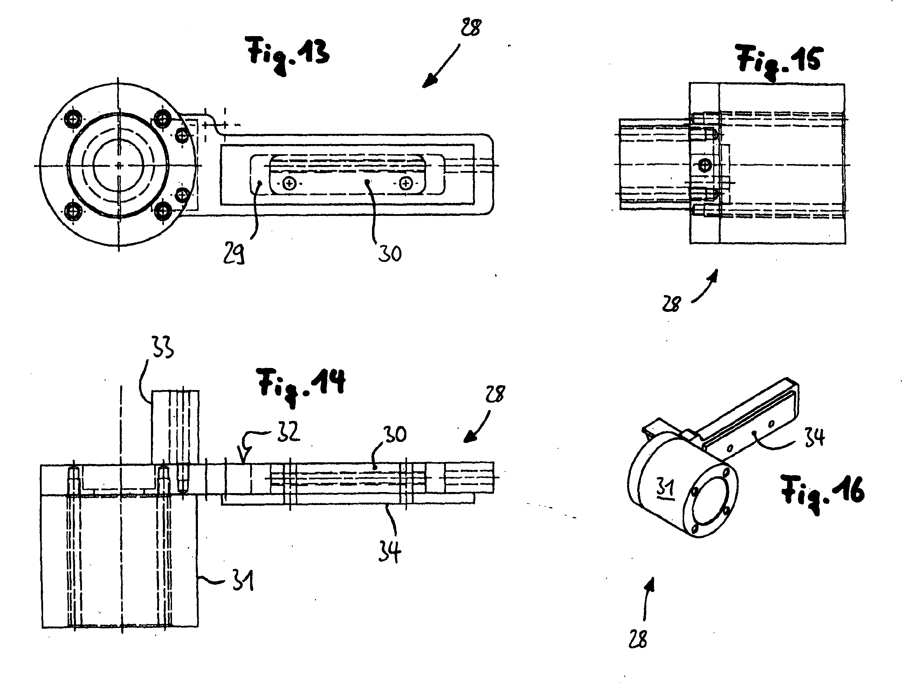

Das Kopfstück 16 (Figuren 5 bis 8) hat an seiner linken Seite 17 eine wesentlich größere Höhe 18 als die linke Seite 7 des Kopfstückes 1. Hierdurch ist es möglich, einen relativ großen Lochkreis 19 mit entsprechenden Bohrungen 20 (hier nur exemplarisch dargestellt) an dem Kopfstück 16 anzuordnen. Die Bohrungen 20 auf dem Lochkreis 19 dienen dazu, einen Motorflansch 31 (Figur 14) mittels Schrauben (hier nicht dargestellt) an das Kopfstück 16 anzuflanschen. Die Gewindebohrungen 20 sind hierbei ebenfalls als Gewindesacklöscher ausgebildet (Figur 6).

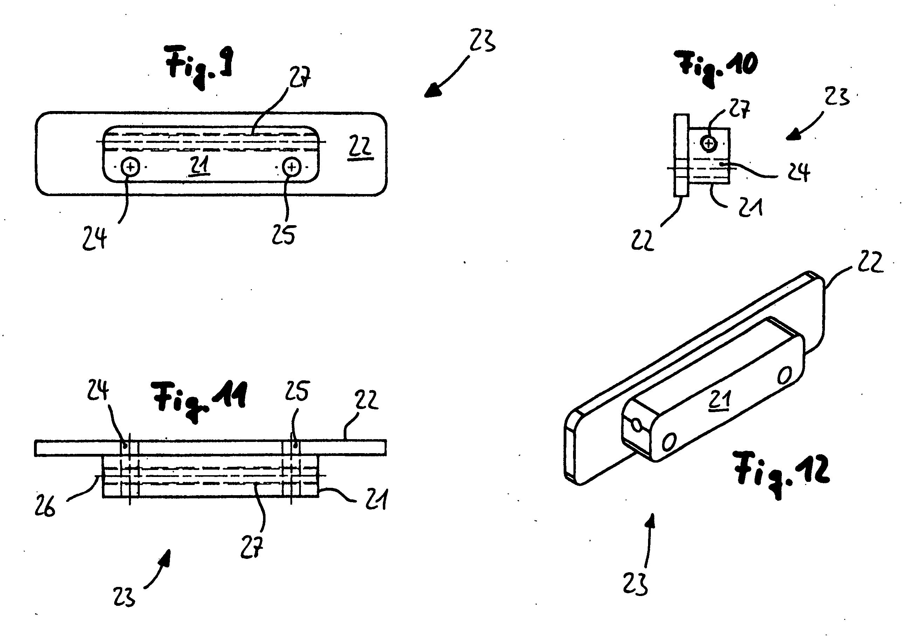

Der in den Figuren 9 bis 12 gezeigte Stellklotz 21 bildet mit einer Druckplatte 22 eine einteilige Einheit 23.

Die Einheit 23 hat zwei Durchgangsbohrungen 24 und 25, in denen jeweils eine Schraube 56 bis 59 (Figur 21) angeordnet werden kann, um die Einheit 23 an einem Förderbandrahmen 43 (Figur 21) zu befestigen. Der Stellklotz 21 hat entlang seiner Längsachse 26 eine Gewindedurchgangsbohrung 27. Mittels der Gewindedurchgangsbohrung 27 und einer darin angeordneten Gewindestange 60 bis 63 (Figur 22) wird ein Kopfstück 1 oder 16 gegenüber dem Stellklotz 21 sowie gegenüber der Druckplatte 22 verstellt.

Die Figuren 13 bis 16 zeigen ein weiteres Kopfstück 28, in dessen Materialausnehmung 29 ein Stellklotz 30 angeordnet ist. An dem Kopfstück 28 ist ein Motorflansch 31 angeordnet, der einen Motor (hier nicht dargestellt) beabstandet von dem Kopfstück 28 aufnimmt. An einer dem Motorflansch 31 abgewandten Kopfstückseite 32 ist ein Spaltschutz 33 angeordnet.

Der Stellklotz 30 umfasst eine Druckplatte 34, die zum einen den Stellklotz 30 sowie die Materialausnehmung 29 komplett abdeckt.

Das in den Figuren 17 bis 20 abgebildete Kopfstück 35 hat in seiner Nut 36 einen Stellklotz 37 angeordnet, wobei der Stellklotz 37 eine Druckplatte 38 aufweist.

Zwischen einem Lagerbereich 39 des Kopfstückes 35 und der Nut 36 ist ein Spaltschutz 40 angeordnet.

Das in den Figuren 21 und 22 gezeigte Fördersystem 41 umfasst einen Gurtlauf 42, einen Rahmen 43 sowie vier Kopfstücke 44, 45, 46 und 47. Die Kopfstücke 44 bis 46 sind jeweils an dem Rahmen 43 des Fördersystems 41 mittels jeweils einem Stellklotz 48 bis 51 gegenüber dem Fördersystem 41 geführt und mittels Druckplatten 52 bis 55 gegenüber dem Fördersystem 41 verklemmt.

Wird eine der Druckplatten 52 bis 55 durch Lösen von Schrauben 56, 57, 58 und 59 gegenüber dem Rahmen 43 gelockert, kann sich jeweils das Kopfstück 44 bis 47 gegenüber dem Rahmen 43 bewegen. Hierbei werden die Kopfstücke 44 bis 47 jeweils von ihrem dazugehörigen Stellklotz 48 bis 51 geführt. Um ein Spannen des Gurtes auch bei großen Kräften zu ermöglichen, wird das jeweilige Kopfstück 44 bis 47 mittels jeweils einer Schraube 60, 61, 62 und 63 gegenüber dem Stellklotz 48, 49, 50 und 51 verstellt, bis der Gurt 42 die richtige Spannung aufweist. Daran anschließend werden die Schrauben 56 bis 59 wieder angezogen, wodurch die Druckplatten 52 bis 55 das jeweilige Kopfstück 44 bis 47 gegenüber dem Rahmen 43 verklemmen.

Die Kopfstücke 44 bis 47 weisen jeweils einen Spaltschutz 64, 65, 66 und 67 auf. Lediglich das Kopfstück 47 hat zusätzlich noch einen Motorflansch 68, an welchem ein Antriebsmotor (hier nicht dargestellt) angeordnet werden kann.

## Patentansprüche

1. Kopfstück (1; 16; 28; 35; 44-47) zum Einstellen eines Gurtlaufes (42) an einem Fördersystem (41), welches Fördersystem (41) eine Walze und einen an dem Rahmen (43) des Fördersystems angeordneten Stellklotz (23; 30; 37; 48-51) aufweist, mit:
- einer ersten Materialausnehmung (8) zum Aufnehmen eines Lagers der Walze;
und
- wenigstens einer weiteren Materialausnehmung (2,29) in welcher der Stellklotz anordenbar ist, wobei diese weitere Materialausnehmung eine Längserstreckung in Richtung der Längsachse des Kopfstücks aufweist, ***dadurch gekennzeichnet, dass*** an wenigstens einer die weitere Materialausnehmung umgrenzenden Seite des Kopfstücks (1; 16; 28; 35; 44-47) eine durchgehende Gewindebohrung (6) angeordnet ist, in welcher eine Gewindestange (60-63) anordenbar ist, wobei das Kopfstück mittels der Gewindestange gegenüber dem Stellklotz verstellt werden kann.

2. Kopfstück (1; 16; 28; 35; 44, 45, 46, 47) nach Anspruch 1, ***dadurch gekennzeichnet, dass*** die weitere Materialausnehmung (2, 29) als Nut (3; 36) verläuft.

3. Kopfstück nach einem der Ansprüche 1 oder 2, ***dadurch gekennzeichnet, dass*** die in Längsrichtung verlaufende Mittelachse (4) der weiteren Materialausnehmung (2; 29) beabstandet von einer durch das Lageraugenzentrum (9) des Walzenlagers verlaufenden Mittelachse (10) des Kopfstückes (1; 16; 28; 35; 44-47) angeordnet ist.

4. Kopfstück nach einem der Ansprüche 1 bis 3, ***dadurch gekennzeichnet, dass*** das Kopfstück (1; 16; 28; 35; 44-47) ein Widerlager aufweist.

5. Kopfstück nach Anspruch 4, ***dadurch gekennzeichnet, dass*** im Bereich des Widerlagers die Gewindebohrung (6) angeordnet ist.

6. Kopfstück nach einem der Ansprüche 1 bis 5, ***gekennzeichnet durch*** eine Materialdicke (15) von weniger als 30 mm, vorzugsweise von weniger als 20 mm.

7. Kopfstück nach einem der Ansprüche 1 bis 6, ***dadurch gekennzeichnet, dass*** das Kopfstück (1; 16; 28; 35; 44-47) wenigstens eine weitere Bohrung (11, 12) aufweist, in welcher ein Befestigungsmittel eines Spaltschutzes (33; 40; 64, 65-67) angeordnet ist.

8. Kopfstück nach einem der Ansprüche 1 bis 7, ***dadurch gekennzeichnet, dass*** das Kopfstück (28; 47) einen Motorhalter (31; 68) aufweist.

9. Kopfstück nach einem der Ansprüche 1 bis 8, ***dadurch gekennzeichnet, dass*** das Kopfstück (1; 16; 28; 35; 44- 47) entlang seiner Längsachse (10) verschiedene Werte hinsichtlich einer Kopfstücktiefe aufweist.

10. Kopfstück nach einem der Ansprüche 1 bis 9, ***dadurch gekennzeichnet, dass*** das Kopfstück (1; 16; 28; 35; 44-47) entlang seiner Längsachse (10) und orthogonal zu der Materialausnehmungsöffnung verschiedene Werte hinsichtlich einer Kopfstückhöhe (18) aufweist.

11. Kopfstück nach einem der Ansprüche 1 bis 10 ***dadurch gekennzeichnet, dass*** das Kopfstück (1; 16; 28; 35; 44-47) aus einer Stahllegierung oder aus einer Aluminiumlegierung hergestellt ist.

12. Anordnung zum Einstellen eines Gurtlaufes (42) an einem Fördersystem (41) aus:
- einem Kopfstück (1; 16; 28; 35; 44-47) nach einem der Ansprüche 1 bis 11,
- einem Stellklotz (23; 30; 37; 48-51); und
- einer Druckplatte (22; 34; 38; 52- 55):
wobei der Stellldotz (23; 30; 37; 48-51) in der weiteren Materialausnehmung (2;29) des Kopfstückes (1; 16; 28; 35; 44-47) angeordnet ist und die Druckplatte (22; 34; 38; 52-55) die weitere Materialausnehmung (2; 29) überdeckt.

13. Anordnung nach Anspruch 12, ***dadurch gekennzeichnet, dass*** das Kopfstück (1; 16; 28; 35; 44-47) in der weiteren Materialausnehmung (2; 29) an dem Stellklotz (23; 30; 37; 48-51) gelagert ist.

14. Anordnung nach einem der Ansprüche 12 oder 13, ***dadurch gekennzeichnet, dass*** das Kopfstück (1; 16; 28; 35; 44-47) um den Stellklotz (23; 30; 37; 48-51) herum angeordnet ist.

15. Anordnung nach einem der Ansprüche 12 bis 14, ***dadurch gekennzeichnet, dass*** das Kopfstück (1; 16; 28; 35; 44-47) ein Schlitten ist, der relativ zum Stellklotz (23; 30; 37; 48-51) bewegbar ist.

16. Anordnung nach einem der Ansprüche 12 bis 15, ***dadurch gekennzeichnet, dass*** der Stellklotz (23; 30; 37; 48-51) eine Längsbohrung (27) aufweist, in welcher die Gewindestange (60-63) anordenbar ist.

17. Anordnung nach Anspruch 16, ***dadurch gekennzeichnet, dass*** die Längsbohrung (27) eine Durchgangsbohrung ist.

18. Anordnung nach einem der Ansprüche 16 oder 17, ***dadurch gekennzeichnet, dass*** die Längsbohrung (27) ein Gewinde aufweist.

19. Anordnung nach einem der Ansprüche 12 bis 18, ***dadurch gekennzeichnet, dass*** der Stellklotz (23; 30; 37; 48-51) eine geringere Tiefe aufweist als die Tiefe der Materialausnehmung (2; 29) bzw. als die Tiefe des Kopfstückes (1; 16; 28; 35; 44-47).

20. Anordnung nach einem der Ansprüche 12 bis 19, ***dadurch gekennzeichnet, dass*** der Stellklotz (23; 30; 37; 48-51) und die Druckplatte (22; 34; 38; 52-55) einteilig sind.

21. Anordnung nach einem der Ansprüche 12 bis 20, ***dadurch gekennzeichnet, dass*** die Druckplatte (22; 34; 38; 52-55) den Stellklotz (23; 30; 37; 48-51) überdeckt.

## Claims

1. A headpiece (1; 16; 28; 35; 44-47) for adjusting the run (42) of a belt on a conveyor system (41), said conveyor system (41) comprising a roller and an adjusting block (23; 30; 37; 48-51) disposed on the frame (43) of said conveyor system, with:
- a first material recess (8) for receiving a bearing of said roller;
and
- at least one additional material recess (2, 29) in which said adjusting block may be disposed, said additional material recess comprising a length extension in the direction of the longitudinal axis of said head piece,
***characterized in that*** on at least one side of said headpiece (1; 16; 28; 35; 44-47) surrounding said additional material recess there is disposed a threaded through hole (6) in which a threaded rod (60-63) may be disposed, said headpiece being adjustable with respect to said adjusting block by means of said threaded rod.

2. The headpiece (1; 16; 28; 35; 44-47) as set forth in claim 1, ***characterized in that*** the additional material recess (2, 29) extends as a groove (3; 36).

3. The headpiece as set forth in claim 1 or 2, ***characterized in that*** the central axis (4) extending in the longitudinal direction of the additional material recess (2; 29) is arranged at a distance from a central axis (10) of said headpiece (1; 16; 28; 35; 44-47), which extends through the center (9) of the bearing lug of the roller bearing.

4. The headpiece as set forth in any one of the claims 1 through 3, ***characterized in that*** said headpiece (1; 16; 28; 35; 44-47) comprises a thrust bearing.

5. The headpiece as set forth in claim 4, ***characterized in that*** the threaded hole (6) is disposed in the region of the thrust bearing.

6. The headpiece as set forth in any one of the claims 1 through 5, ***characterized by*** a material thickness (15) of less than 30 mm, preferably of less than 20 mm.

7. The headpiece as set forth in any one of the claims 1 through 6, ***characterized in that*** said headpiece (1; 16; 28; 35; 44-47) comprises at least one hole (11, 12) in which a fastening means of a gap protection (33; 40; 64, 65-67) is disposed.

8. The headpiece as set forth in any one of the claims 1 through 7, ***characterized in that*** said headpiece (28; 47) comprises a motor holder (31; 68).

9. The headpiece as set forth in any one of the claims 1 through 8, ***characterized in that,*** along its longitudinal axis (10), said headpiece (1; 16; 28; 35; 44-47) has different values with regards to a depth of said headpiece.

10. The headpiece as set forth in any one of the claims 1 through 9, ***characterized in that,*** along its longitudinal axis (10) and perpendicular to the material recess opening, said headpiece (1; 16; 28; 35; 44-47) comprises different values with regards to a height (18) of said headpiece.

11. The headpiece as set forth in any one of the claims 1 through 10, ***characterized in that*** said headpiece (1; 16; 28; 35; 44-47) is made from a steel alloy or from an aluminum alloy.

12. An array for adjusting the run (42) of a belt on a conveyor system (41) consisting of:
- a headpiece (1; 16; 28; 35; 44-47) as set forth in any one of the claims 1 through 11,
- an adjusting block (23; 30; 37; 48-51); and
- a pressure plate (22; 34; 38; 52-55);
said adjusting block (23; 30; 37; 48-51) being disposed in the additional material recess (2; 29) of said headpiece (1; 16; 28; 35; 44-47) and said pressure plate (22; 34; 38; 52-55) covering the additional material recess (2; 29).

13. The array as set forth in claim 12, ***characterized in that*** the headpiece (1; 16; 28; 35; 44-47) is carried on the adjusting block (23; 30; 37; 48-51) in the additional material recess (2; 29).

14. The array as set forth in any one of the claims 12 or 13, ***characterized in that*** the headpiece (1; 16; 28; 35; 44-47) is disposed about the adjusting block (23; 30; 37; 48-51).

15. The array as set forth in any one of the claims 12 through 14, ***characterized in that*** the headpiece (1; 16; 28; 35; 44-47) is a cradle that is movable relative to the adjusting block (23; 30; 37; 48-51).

16. The array as set forth in any one of the claims 12 through 15, ***characterized in that*** the adjusting block (23; 30; 37; 48-51) comprises a longitudinal hole (27) in which the threaded rod (60-63) may be disposed.

17. The array as set forth in claim 16, ***characterized in that*** the longitudinal hole (27) is a through hole.

18. The array as set forth in claim 16 or 17, ***characterized in that*** the longitudinal hole (27) comprises a thread.

19. The array as set forth in any one of the claims 12 through 18, ***characterized in that*** the adjusting block (23; 30; 37; 48-51) is less deep than the material recess (2; 29) or than the headpiece (1; 16; 28; 35; 44-47).

20. The array as set forth in any one of the claims 12 through 19, ***characterized in that*** the adjusting block (23; 30; 37; 48-51) and the pressure plate (22; 34; 38; 52-55) are made from one piece.

21. The array as set forth in any one of the claims 12 through 20, ***characterized in that*** the pressure plate (22; 34; 38; 52-55) covers the adjusting block (23; 30; 37; 48-51).

## Revendications

1. Pièce de tête (1; 16; 28; 35; 44-47) destinée au réglage du défilement d'une courroie (42) sur un système de convoyage (41), lequel système de convoyage (41) comporte un rouleau et un bloc de réglage (23; 30; 37; 48-51) disposé sur le bâti (43) du système de convoyage, avec :
- un premier évidement (8) de matière destiné à recevoir un palier du rouleau ;
et
- au moins un autre évidement (2, 29) de matière dans lequel le bloc de réglage est apte à être disposé, cet autre évidement de matière s'étendant en longueur dans le sens de l'axe longitudinal de la pièce de tête,
***caractérisée en ce que,*** sur au moins un côté de la pièce de tête (1; 16; 28; 35; 44-47) entourant l'autre évidement de matière est disposé un trou taraudé traversant (6) dans lequel est apte à être disposée une tige filetée (60-63), la pièce de tête pouvant être ajustée par rapport au bloc de réglage au moyen de la tige filetée.

2. Pièce de tête (1; 16; 28; 35; 44-47) selon la revendication 1, ***caractérisée en ce que*** l'autre évidement de matière (2, 29) s'étend sous forme de rainure (3 ; 36).

3. Pièce de tête selon l'une quelconque des revendications 1 ou 2, ***caractérisée en ce que*** l'axe médian (4) s'étendant dans le sens de la longueur de l'autre évidement de matière (2 ; 29) est disposé à distance d'un axe médian (10) de la pièce de tête (1; 16; 28; 35; 44-47) traversant le centre (9) du bossage du palier du rouleau.

4. Pièce de tête selon l'une quelconque des revendications 1 à 3, ***caractérisée en ce que*** la pièce de tête (1; 16; 28; 35; 44-47) comporte une butée.

5. Pièce de tête selon la revendication 4, ***caractérisée en ce que*** le trou taraudé (6) est disposé à la hauteur de la butée.

6. Pièce de tête selon l'une quelconque des revendications 1 à 5, ***caractérisée par*** une épaisseur de la matière (15) inférieure à 30 mm, de préférence inférieure à 20 mm.

7. Pièce de tête selon l'une quelconque des revendications 1 à 6, ***caractérisée en ce que*** la pièce de tête (1; 16; 28; 35; 44-47) comporte au moins un autre trou (11, 12) dans lequel est disposé un moyen de fixation d'une protection des fentes (33 ; 40 ; 64 ; 65-67).

8. Pièce de tête selon l'une quelconque des revendications 1 à 7, ***caractérisée en ce que*** la pièce de tête (28; 47) comporte un berceau moteur (31 ; 68).

9. Pièce de tête selon l'une quelconque des revendications 1 à 8, ***caractérisée en ce que*** la pièce de tête (1; 16; 28; 35; 44-47) comporte différentes valeurs concernant la profondeur de la pièce de tête le long de son axe longitudinal (10).

10. Pièce de tête selon l'une quelconque des revendications 1 à 9, ***caractérisée en ce que*** la pièce de tête (1; 16; 28; 35; 44-47) comporte différentes valeurs concernant la hauteur (18) de la pièce de tête le long de son axe longitudinal (10) et orthogonalement par rapport à l'ouverture de l'évidement de matière.

11. Pièce de tête selon l'une quelconque des revendications 1 à 10, ***caractérisée en ce que*** la pièce de tête (1; 16; 28; 35; 44-47) est réalisée en un alliage d'acier ou en un alliage d'aluminium.

12. Montage destiné à ajuster le défilement d'une courroie (42) sur un système de convoyage (41) constitué par :
- une pièce de tête (1; 16; 28; 35; 44-47) selon l'une quelconque des revendications 1 à 11,
- un bloc de réglage (23; 30; 37; 48-51) ; et
- une plaque de butée (22; 34; 38; 52-55) ;
le bloc de réglage (23; 30; 37; 48-51) étant disposé dans l'autre évidement de matière (2 ; 29) de la pièce de tête (1; 16; 28; 35; 44-47) et la plaque de butée (22; 34; 38; 52-55) recouvrant l'autre évidement de matière (2 ; 29).

13. Montage selon la revendication 12, ***caractérisé en ce que*** la pièce de tête (1; 16; 28; 35; 44-47) est montée dans l'autre évidement de matière (2 ; 29) sur le bloc de réglage (23; 30; 37; 48-51).

14. Montage selon l'une quelconque des revendications 12 ou 13, ***caractérisé en ce que*** la pièce de tête (1; 16; 28; 35; 44-47) est disposée autour du bloc de réglage (23; 30; 37; 48-51).

15. Montage selon l'une quelconque des revendications 12 à 14, ***caractérisé en ce que*** la pièce de tête (1; 16; 28; 35; 44-47) est un chariot qui est mobile par rapport au bloc de réglage (23; 30; 37; 48-51).

16. Montage selon l'une quelconque des revendications 12 à 15, ***caractérisé en ce que*** le bloc de réglage (23; 30; 37; 48-51) comporte un trou longitudinal (27) dans lequel est apte à être disposée la tige filetée (60-63).

17. Montage selon la revendication 16, ***caractérisé en ce que*** le trou longitudinal (27) est un trou traversant.

18. Montage selon l'une quelconque des revendications 16 ou 17, ***caractérisé en ce que*** le trou longitudinal (27) comporte un filetage.

19. Montage selon l'une quelconque des revendications 12 à 18, ***caractérisé en ce que*** le bloc de réglage (23; 30; 37; 48-51) a une profondeur inférieure à la profondeur de l'évidement de matière (2 ; 29) ou à la profondeur de la pièce de tête (1; 16; 28; 35; 44-47).

20. Montage selon l'une quelconque des revendications 12 à 19, ***caractérisé en ce que*** le bloc de réglage (23; 30; 37; 48-51) et la plaque de butée (22; 34; 38; 52-55) sont réalisés d'une seule pièce.

21. Montage selon l'une quelconque des revendications 12 à 20, ***caractérisé en ce que*** la plaque de butée (22; 34; 38; 52-55) recouvre le bloc de réglage (23; 30; 37; 48-51).
